# EUROPEAN PATENT APPLICATION

(11) **EP 2 950 427 A1**
(43) Date of publication of application: **02.12.2015**
(21) Application number: 15169501.2
(22) Date of filing: 27.05.2015
(51) Int. Cl.: H02K 5/26

(54) **MOTOR HOLDER**

(30) Priority: 28.05.2014 JP 2014109877
(71) Applicant: Funai Electric Company Ltd, Daito-shi Osaka 574-0013 (JP)
(72) Inventor: Nishinakama, Hideki, Daito-shi, Osaka 5740013 (JP)
(74) Representative: Vigand, Philippe

(57) **Abstract**

A motor holder 100 includes: a plate 110 including a first surface 110a and a second surface 110b; a first opening 121 formed through the plate 110 and fittingly receiving a fitting part 203 of a motor 200; a second opening 122 that is formed through the plate 110, larger than the first opening 121, and in communication with the first opening 121; and a spacer 130 projecting from the first surface 110a and maintaining a space between the first surface 110a and an intersecting surface 202 of the motor 200 by contacting the intersecting surface 202 while a rotating component 210 is passed through the second opening 122 from the first surface 110a side to the second surface 110b side.

## Description

### Field

The present invention relates to a motor holder to which a motor is mountable while a rotating component is attached to the shaft of the motor.

### Background

Motors (electric motors) are used as drive sources in a number of electronics. For example, a motor is used in printers to rotate the paper feed roller that transports paper. Power from the motor is generally transferred to the paper feed roller via a transfer mechanism such as a gear. As such, the motor needs to be mounted while maintaining proper positioning with respect to the transfer mechanism.

For example, Patent Literature (PTL) 1 discloses a guide ring for mounting a motor in proper position.

### Citation List

### Patent Literature

[PTL 1] Japanese Unexamined Patent Application Publication No. 2003-176855

### Summary

### Technical Problem

PTL 1 requires a component (guide ring) to mount the motor in proper position. This complicates the assembly process and therefore reduces work efficiency.

The present invention provides a motor holder to which a motor can be mounted in proper position while a rotating component is attached to the shaft of the motor and which increases work efficiency.

### Solution to Problem

According to one aspect of the present invention, a motor holder to which a motor is mountable while a rotating component is attached to a shaft of the motor, includes: a plate including a first surface and a second surface opposite the first surface; a first opening formed through the plate and fittingly receiving a fitting part of the motor, the fitting part projecting from an intersecting surface of the motor and surrounding the shaft, the intersecting surface intersecting the shaft; a second opening formed through the plate, the second opening being larger than the first opening and in communication with the first opening; and a spacer projecting from the first surface and maintaining a space between the first surface and the intersecting surface of the motor by contacting the intersecting surface while the rotating component is passed through the second opening from the first surface side to the second surface side.

With this configuration, the first opening, which fittingly receives the fitting part of the motor, is in communication with the second opening, which is larger than the first opening. Thus, when the rotating component cannot be passed through the first opening, the rotating component can be passed through the plate via the second opening to allow the shaft of the motor to be moved to the first opening. Then, after the shaft of the motor is moved to the first opening, the fitting part of the motor can be fitted in the first opening. With this, the motor can be mounted in proper position while the rotating component is attached to the shaft of the motor.

Furthermore, with this configuration, the spacer can maintain a space between the first surface and the intersecting surface of the motor by contacting the intersecting surface while the rotating component is passed through the second opening from the first surface side to the second surface side. Thus, the rotating component can be inhibited from contacting the plate while moving the motor to the first opening. In other words, while the rotating component is attached to the shaft of the motor, the fitting part can easily be fitted in the first opening without the rotating component contacting the plate.

As described above, with this configuration, the motor can be mounted in proper position without the need for an additional component, other than the motor holder, for mounting the motor in proper position. Furthermore, damage to the rotating component from contacting the plate can be inhibited, and workability regarding mounting the motor to the motor holder can be increased. As a result, work efficiency regarding mounting the motor to the motor holder while the rotating component is attached to the motor can be increased.

For example, the spacer may be formed along a periphery of the second opening on the first surface.

With this configuration, the spacer can be disposed along the periphery of the second opening on the first surface. Thus, while the shaft of the motor is inserted in the second opening, the intersecting surface can be brought into contact with and stably rested on the spacer. As a result, the rotating component can be further inhibited from contacting the plate.

For example, the spacer may include a sloped portion having a height, measured from the first surface, which decreases with decreasing distance to the first opening.

With this configuration, since the spacer includes a sloped portion, the motor can be guided toward the first surface as the shaft of the motor is moved from the second opening to the first opening. This allows for easy fitting of the fitting part of the motor into the first opening since the sloped portion guides the motor closer to the first surface. In other words, work efficiency regarding mounting the motor to the motor holder while the rotating component is attached to the motor can be increased.

For example, the first opening and the second opening may be connected by a communicating section having a length, in a direction perpendicular to a direction in which the first opening and the second opening are aligned, less than a diameter of a circle inscribed in the first opening.

With this configuration, the length of the communicating section can be made smaller than the diameter of a circle inscribed in the first opening. Thus, the fitting part of the motor can be kept from shifting to the second opening while the fitting part is fitted in the first opening. This makes it even easier to mount the motor in proper position.

For example, the spacer may have a height, measured from the first surface, (i) greater than a height of the fitting part measured from the intersecting surface and (ii) less than a distance from the intersecting surface to the rotating component.

With this configuration, the height of the spacer, measured from the first surface, can be (i) greater than the height of the fitting part measured from the intersecting surface and (ii) less than the distance from the intersecting surface to the rotating component. Thus, when moving the motor from the second opening to the first opening, the rotating component and the fitting part can be spaced from the plate, and work efficiency regarding mounting the motor to the motor holder while the rotating component is attached to the motor can be increased.

### Advantageous Effects

With the motor holder according to one aspect of the present invention, a motor can be mounted in proper position while a rotating component is attached to the shaft of the motor, thereby increasing work efficiency.

### Brief Description of Drawings

FIG. 1 is an external perspective view of a printer including a motor holder according to an embodiment.
FIG. 2 is an external perspective view of a motor holder according to an embodiment.
FIG. 3 is an enlarged perspective view of a region where a motor is mounted on a motor holder according to an embodiment.
FIG. 4 is a perspective view of a motor that can be mounted to a motor holder according to an embodiment.
FIG. 5 is a perspective view of a motor and a motor holder according to an embodiment in an assembled state.
FIG. 6 illustrates how a motor is mounted to a motor holder according to an embodiment.
FIG. 7 illustrates how a motor is mounted to a motor holder according to an embodiment.
FIG. 8 illustrates how a motor is mounted to a motor holder according to an embodiment.
FIG. 9 illustrates how a motor is mounted to a motor holder according to an embodiment.
FIG. 10 illustrates a first opening, a second opening, and a spacer of a motor holder according to a first variation of an embodiment.
FIG. 11 illustrates a first opening, a second opening, and a spacer of a motor holder according to a second variation of an embodiment.
FIG. 12 is an enlarged perspective view of a region where a motor is mounted on a motor holder according to a third variation of an embodiment.

### Description of Embodiments

Hereinafter an embodiment will be described in detail with reference to the drawings.

Note that the following embodiment describes a general or specific example. The numerical values, shapes, materials, structural elements, the arrangement and connection of the structural elements described in the following embodiment are mere examples, and therefore do not limit the present disclosure. Moreover, among the structural elements in the following embodiment, structural elements not recited in any one of the independent claims are described as arbitrary structural elements.

### Embodiment

The motor holder according to this embodiment includes a first opening and a second opening. The first opening fittingly receives the fitting part of the motor. The second opening is in communication with the first opening and larger than the first opening. With this configuration, even if a rotating component larger than the fitting part is attached to the shaft of the motor, the motor holder allows the rotating component to be passed through the second opening from the first surface side of the plate to the second surface side.

The motor holder according to this embodiment also includes a spacer. The spacer maintains a space between the intersecting surface of the motor and the first surface by contacting the intersecting surface. With this configuration, the motor holder can inhibit the rotating component from contacting the plate while the shaft of the motor is inserted in the second opening.

Hereinafter the motor holder according to this embodiment will be described in detail with reference to the drawings.

### Printer

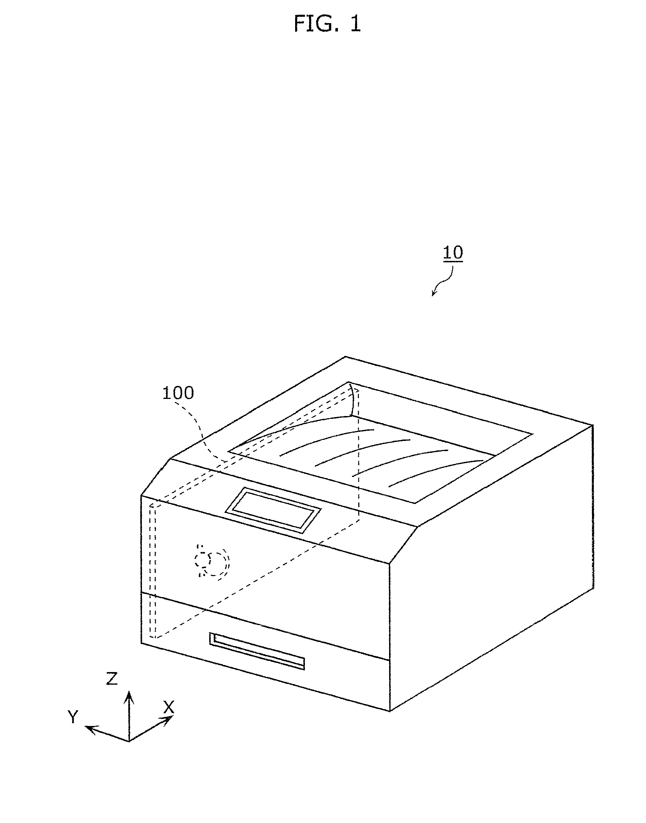

First, the printer including the motor holder will be described. FIG. 1 is an external perspective view of a printer including the motor holder according to this embodiment.

The printer 10 according to this embodiment is a laser printer. The motor holder 100 is disposed inside the printer 10.

The motor holder 100 is a component to which the motor is mounted. The motor holder 100 is also known as a motor mount or a motor fixing member.

Here, the motor holder 100 is a side frame made of resin. Various components are mountable to the motor holder 100 in addition to the motor, such as a paper feed roller.

### Motor Holder

Next, the motor holder according to this embodiment and a motor mountable to the motor holder will be described.

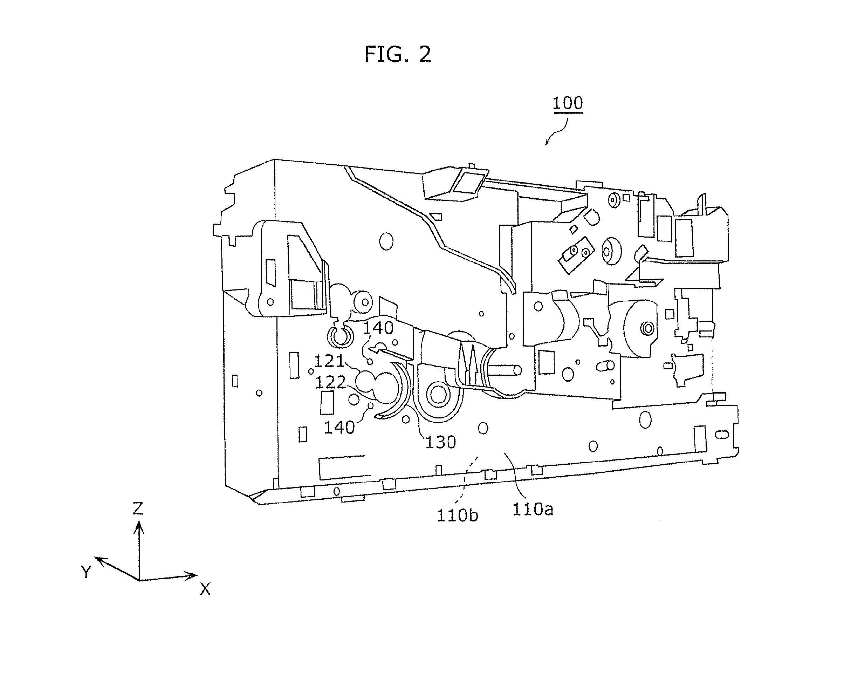

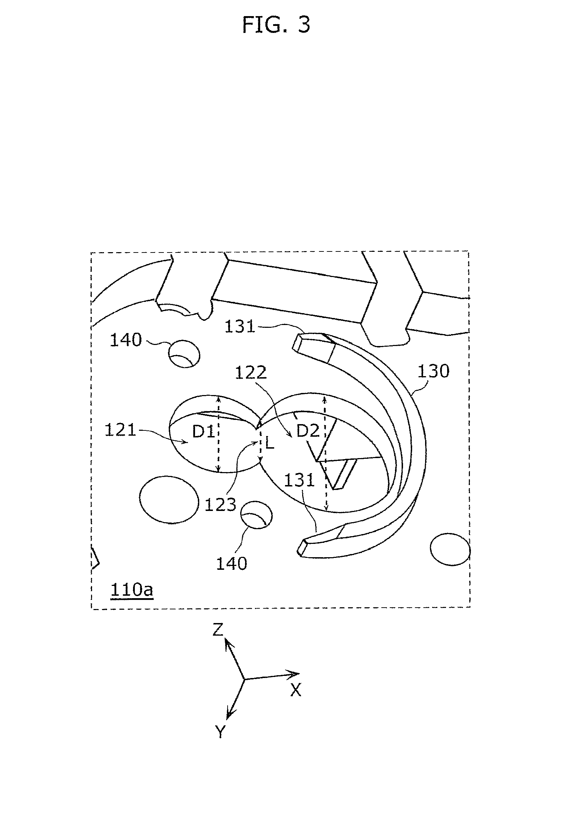

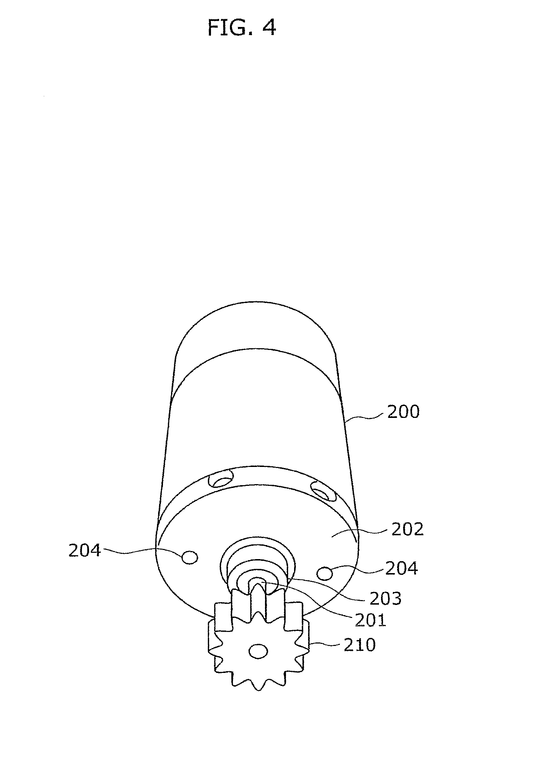

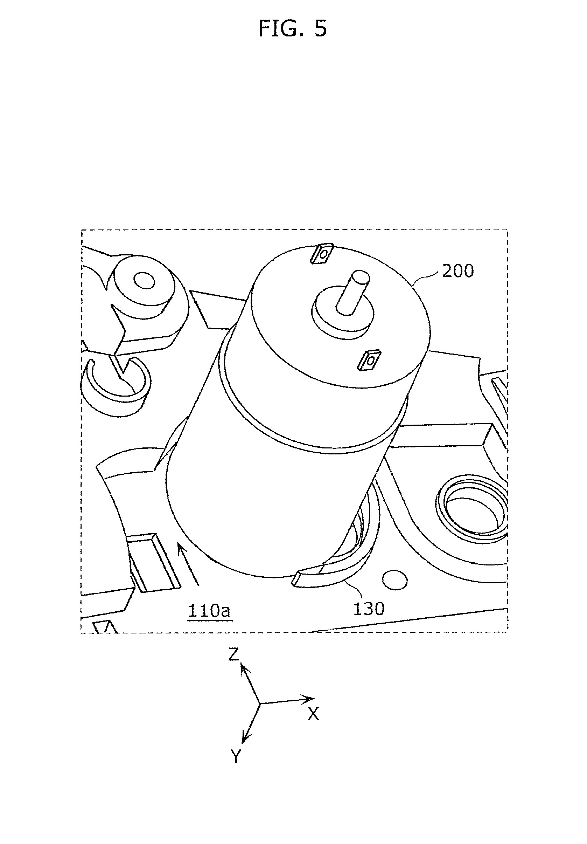

FIG. 2 is an external perspective view of the motor holder according to this embodiment. FIG. 3 is an enlarged perspective view of a region where the motor is mounted on the motor holder according to this embodiment. FIG. 4 is a perspective view of a motor mountable to the motor holder according to this embodiment. FIG. 5 is a perspective view of the motor and the motor holder according to this embodiment in an assembled state.

As illustrated in FIG. 2 and FIG. 3, the motor holder 100 includes a plate 110, a first opening 121, a second opening 122, a spacer 130, and two third openings 140. As illustrated in FIG. 4, the motor 200 includes a shaft 201, an intersecting surface 202, a fitting part 203, two holes 204, and a rotating component 210. The rotating component 210 is attached to the shaft 201 of the motor 200.

First, each structural element of the motor holder 100 will be described in detail.

The plate 110 includes a first surface 110a and a second surface 110b opposite the first surface 110a. In this embodiment, the plate 110 is made of resin and has a thickness that provides sufficient strength.

The first opening 121 is formed through the plate 110. The first opening 121 fittingly receives the fitting part 203 of the motor 200. As such, the first opening 121 has a shape that corresponds to the shape of the fitting part 203 of the motor 200. In this embodiment, the first opening 121 is a circular opening having a diameter D1.

The second opening 122 is formed through the plate 110. The second opening 122 is in communication with the first opening 121. In other words, the first opening 121 and the second opening 122 are spatially connected.

The second opening 122 is larger than the first opening 121. More specifically, the second opening 122 is of a shape and size that allows the rotating component 210 attached to the motor 200 to pass therethrough. In this embodiment, the second opening 122 is a circular opening having a diameter D2 larger than diameter D1.

In this embodiment, the first opening 121 and the second opening 122 partially overlap each other. The overlapping part of the first opening 121 and the second opening 122 is herein referred to as a communicating section 123. In other words, the communicating section 123 connects the first opening 121 and the second opening 122.

The length L of the communicating section 123 connecting the first opening 121 and the second opening 122, measured along a direction perpendicular to the alignment direction of the first opening 121 and the second opening 122, is less than the diameter D1 of a circle inscribed in the first opening 121 (here, diameter D1 is the same as the diameter of the first opening 121). This keeps the fitting part 203 from shifting into the second opening 122 when the fitting part 203 of the motor 200 is fitted in the first opening 121.

The spacer 130 projects from the first surface 110a of the plate 110 and maintains a space between the motor 200 and the motor holder 100. More specifically, the spacer 130 maintains a space between the first surface 110a of the plate 110 and the intersecting surface 202 of the motor 200 by contacting the intersecting surface 202 of the motor 200 while the rotating component 210 is passed through the second opening 122 from the first surface 110a side to the second surface 110b side. Even more specifically, the spacer 130 maintains a space between the first surface 110a and the intersecting surface 202 of a depth that keeps the fitting part 203 from contacting the first surface 110a and keeps the rotating component 210 from contacting the second surface 110b.

In other words, the height of the spacer 130 measured from the first surface 110a is greater than the height of the fitting part 203 measured from the intersecting surface 202 of the motor 200. With this, the fitting part 203 can be kept from coming into contact with the first surface 110a while the intersecting surface 202 of the motor 200 is in contact with the spacer 130.

Moreover, the height of the spacer 130 measured from the first surface 110a is less than the distance (minimum distance) between the intersecting surface 202 and the rotating component 210 of the motor 200. The height of the spacer 130 measured from the first surface 110a is preferably less than a difference between (i) the distance between the intersecting surface 202 and the rotating component 210 of the motor 200 and (ii) the thickness of the plate 110. With this, the rotating component 210 can be kept from coming into contact with the second surface 110b when the intersecting surface 202 of the motor 200 is in contact with the spacer 130.

In this embodiment, the spacer 130 is formed on the first surface 110a along the periphery of the second opening 122. With this, if the intersecting surface 202 of the motor 200 is pushed toward the first surface 110a of the plate 110 while the shaft 201 of the motor 200 is inserted through the second opening 122, the spacer 130 will contact the intersecting surface 202 of the motor 200. If the intersecting surface 202 of the motor 200 is pushed toward the first surface 110a of the plate 110 while the shaft 201 of the motor 200 is passed through the center of the first opening 121, the spacer 130 will not contact the intersecting surface 202 of the motor 200. In other words, as illustrated in FIG. 5, the spacer 130 is positioned so as to avoid contact with the intersecting surface 202 of the motor 200 when the motor 200 and the motor holder 100 are in an assembled state (i.e., when the fitting part 203 is fitted in the first opening 121).

Moreover, in this embodiment, the spacer 130 includes a sloped portion 131 whose height, measured from the first surface 110a, decreases with decreasing distance to the first opening 121. Here, the sloped portion 131 is formed at both ends of the spacer 130.

As a result of contacting the sloped portion 131, the intersecting surface 202 of the motor 200 slopes toward the first opening 121. This guides the intersecting surface 202 of the motor 200 toward the first surface 110a when the shaft 201 of the motor 200 is moved toward the center of the first opening 121.

The third openings 140 are formed through the plate 110. The third openings 140 each receive a fastener (not shown in the drawings) for fixing the motor 200 to the plate 110. The fasteners are inserted in the third openings 140 from the second surface 110b side toward the first surface 110a side.

Next, each structural element of the motor 200 will be described in detail.

The shaft 201 transfers the rotational power of the rotor in the motor 200 to an external component. The shaft 201 projects from the intersecting surface 202. In this embodiment, the rotating component 210 is attached to the shaft 201 before the motor 200 is mounted to the motor holder 100.

The intersecting surface 202 is a face of the motor 200 that intersects the shaft 201. Here, the intersecting surface 202 intersects the shaft 201 at a right angle.

The fitting part 203 projects from the intersecting surface 202, and surrounds the shaft 201. Here, the fitting part 203 has a cylindrical shape. The fitting part 203 fits with the first opening 121 of the motor holder 100.

The holes 204 are formed in the intersecting surface 202. The holes 204 overlap with the third openings 140 formed in the motor holder 100 when the fitting part 203 is fitted in the first opening 121 of the motor holder 100.

In other words, the fasteners are inserted in the holes 204 through the third openings 140 formed in the motor holder 100. The holes 204 are, for example, threaded holes, and screws (fasteners) are inserted through the third openings 140 formed in the motor holder 100 and screwed into the holes 204 to fix the motor 200 to the motor holder 100.

The rotating component 210 attaches to the shaft 201. The rotating component 210 rotates along with the shaft 201. In this embodiment, the rotating component 210 is a spur gear, as illustrated in FIG. 4.

### Mounting the Motor to the Motor Holder

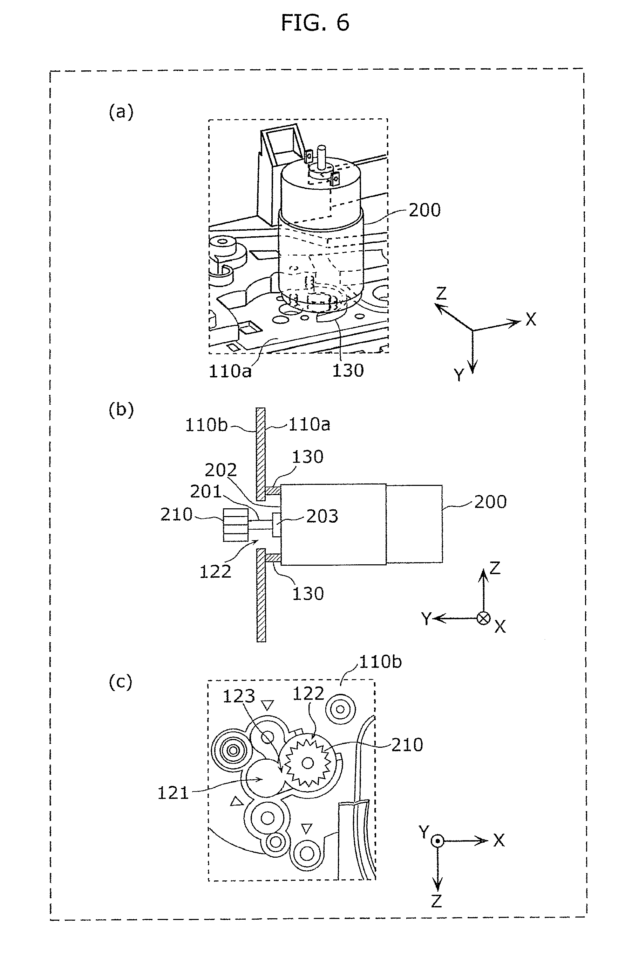

Next, a method for mounting the motor 200 to the motor holder 100 described above will be described. FIG. 6 through FIG. 9 illustrate how a motor is mounted to a motor holder according to this embodiment.

In FIG. 6 through FIG. 9, (a) is a perspective view of the motor holder and the motor from the first surface side, (b) is a cross sectional view of the motor holder and the motor as viewed along the X axis, and (c) is a plan view of the motor holder and the motor from the second surface side.

First, the worker inserts the shaft 201 and the rotating component 210 of the motor 200 through the second opening 122 of the motor holder 100, from the first surface 110a side through to the second surface 110b side, as illustrated in FIG. 6. Here, as illustrated in (b) in FIG. 6, the position of the motor 200 relative to the plate 110 in a direction perpendicular to the first surface 110a is determined by the intersecting surface 202 contacting the spacer 130. In other words, the spacer 130 maintains a space between the first surface 110a and the intersecting surface 202.

More specifically, the height of the spacer 130 measured from the first surface 110a is less than the distance between the intersecting surface 202 and the rotating component 210. With this, as illustrated in (b) in FIG. 6, the motor 200 is held in a state in which the rotating component 210 is passed through the plate 110 and distanced from the second surface 110b.

Moreover, the height of the spacer 130 measured from the first surface 110a is greater than the height of the fitting part 203 measured from the intersecting surface 202. With this, as illustrated in (b) in FIG. 6, the motor 200 is held in a state in which the fitting part 203 is spaced from the first surface 110a so as not to reach the plate 110.

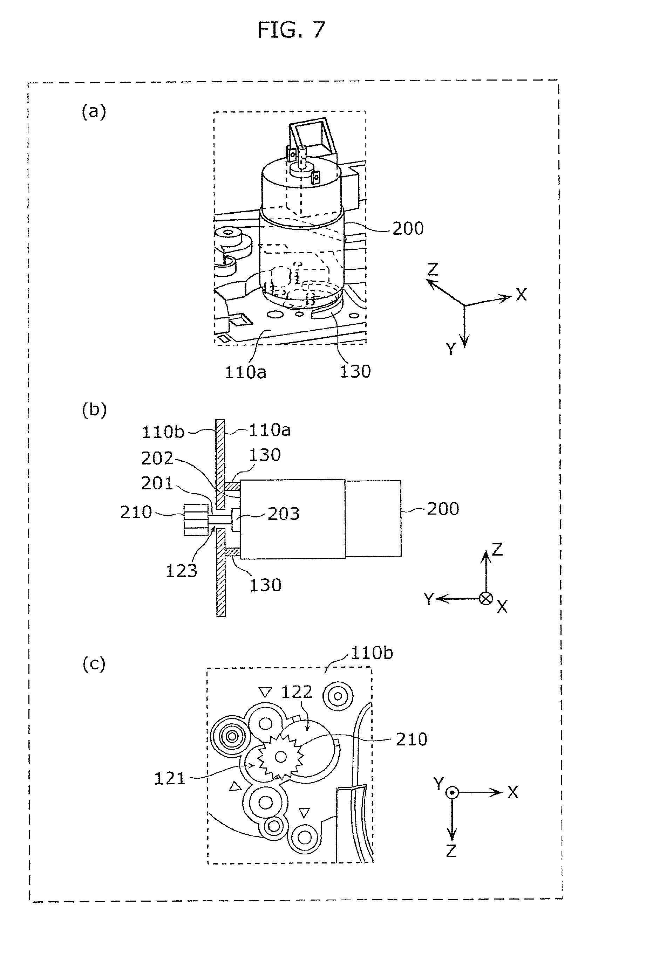

Next, the worker moves the shaft 201 of the motor 200 to the communicating section 123 while pressing the intersecting surface 202 against the spacer 130, as illustrated in FIG. 7. In other words, the worker slides the shaft 201 of the motor 200 to the communicating section 123 while the first surface 110a and the intersecting surface 202 are kept at a distance from each other. With this, as illustrated in (b) in FIG. 7, neither the rotating component 210 nor the fitting part 203 contact the plate 110.

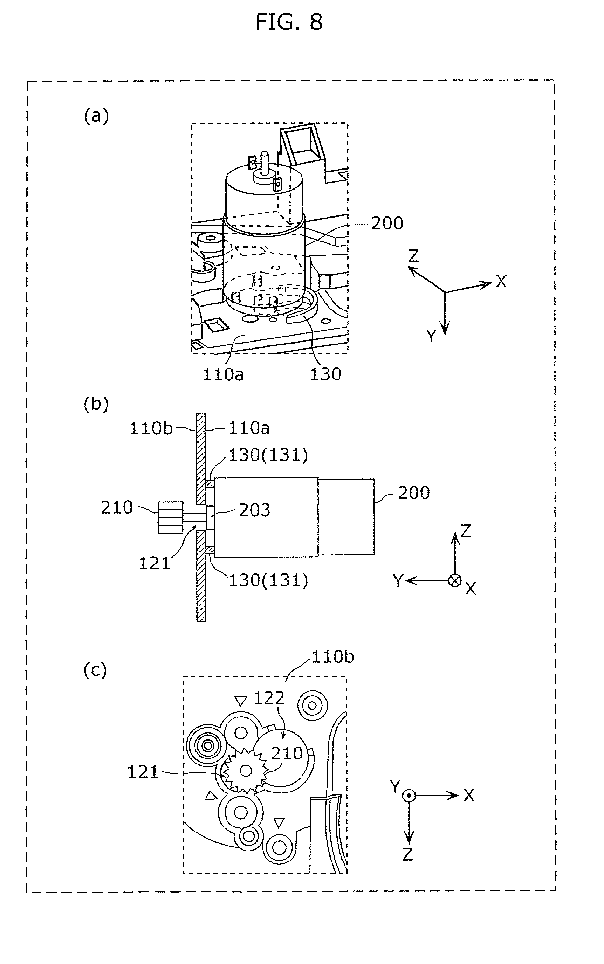

Next, the worker moves the shaft 201 of the motor 200 from the communicating section 123 toward the center of the first opening 121 while the intersecting surface 202 is kept in contact with the spacer 130. As a result, the intersecting surface 202 reaches the sloped portion 131 of the spacer 130, as illustrated in FIG. 8.

Here, the shaft 201 of the motor 200 slopes toward the first opening 121 due to the incline of the sloped portion 131. Moreover, due to the decreasing height of the spacer 130 at the sloped portion 131, the intersecting surface 202 of the motor 200 is brought into proximity with the first surface 110a.

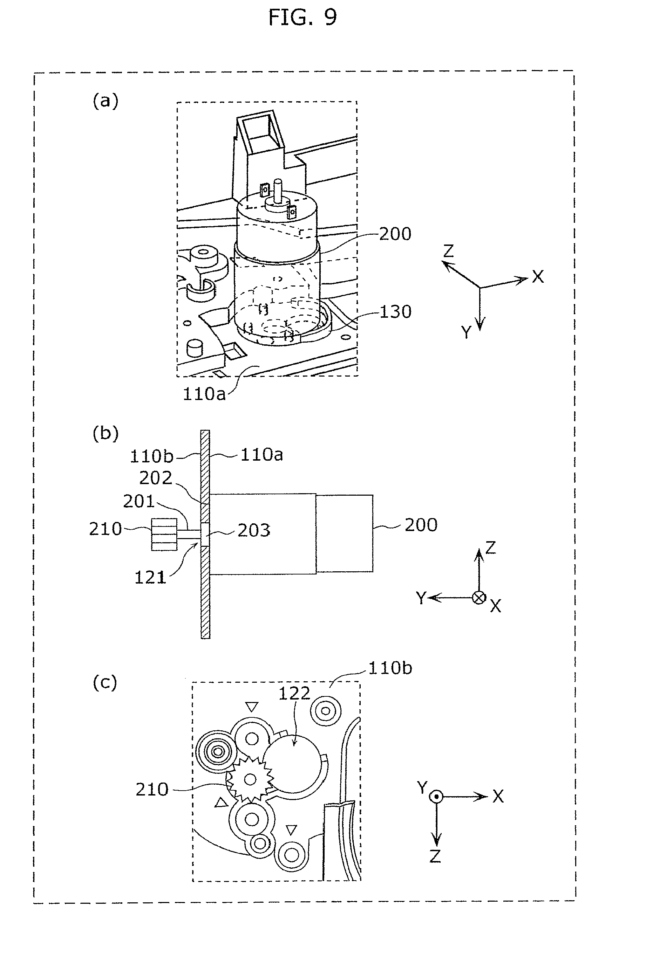

Lastly, the worker moves the shaft 201 of the motor 200 to the center of the first opening 121. As a result, the shaft 201 of the motor 200 reaches the center of the first opening 121, as illustrated in FIG. 9. Here, the intersecting surface 202 of the motor 200 is separated from the spacer 130. In this way, the fitting part 203 is inserted into the first opening 121 and the intersecting surface 202 is brought into contact with the first surface 110a of the plate 110. In other words, the motor 200 is properly positioned in the motor holder 100 as a result of the fitting part 203 being fitted in the first opening 121.

While the fitting part 203 is fitted in the first opening 121, the fasteners are inserted through the third openings 140 and into the holes 204 of the motor 200 from the second surface 110b side of the plate 110, thereby fixing the motor 200 to the plate 110. In other words, the motor holder 200 mounted to the motor holder 100.

### Advantageous Effects

As described above, with the motor holder 100 according to this embodiment, the first opening 121, which fittingly receives the fitting part 203 of the motor 200, is in communication with the second opening 122, which is larger than the first opening 121. With this, when the rotating component 210 cannot be passed through the first opening 121, the rotating component 210 can be passed through the plate 110 via the second opening 122 and the shaft 201 of the motor 200 can be moved to the first opening 121. Then, after the shaft 201 of the motor 200 is moved to the first opening 121, the fitting part 203 of the motor 200 can be fitted in the first opening 121. With this, the motor 200 can be mounted in proper position while the rotating component 210 is attached to the shaft 201 of the motor 200.

Moreover, with the motor holder 100 according to this embodiment, the spacer 130 can maintain a space between the first surface 110a and the intersecting surface 202 of the motor 200 by contacting the intersecting surface 202 while the rotating component 210 is passed through the second opening 122 from the first surface 110a side to the second surface 110b side. With this, when the motor 200 is moved to the first opening 121, the rotating component 210 can be kept from contacting the plate 110. In other words, while the rotating component 210 is attached to the shaft 201 of the motor 200, the fitting part 203 can easily be fitted in the first opening 121 without the rotating component 210 contacting the plate 110.

As a result, with the motor holder 100 according to this embodiment, the motor 200 can be mounted in proper position without the need for an additional component, other than the motor holder 100, for mounting the motor 200 in proper position. Moreover, damage to the rotating component 210 from contacting the plate 110 can be inhibited, and workability regarding mounting the motor 200 to the motor holder 100 can be increased. As a result, work efficiency regarding mounting the motor 200 to the motor holder 100 while the rotating component 210 is attached to the motor 200 can be increased.

Moreover, with the motor holder 100 according to this embodiment, the spacer 130 can be disposed along the periphery of the second opening 122 on the first surface 110a. With this, while the shaft 201 of the motor 200 is inserted in the second opening 122, the intersecting surface 202 can be brought into contact with and stably rested on the spacer 130. As a result, the rotating component 210 can be further inhibited from contacting the plate 110.

Moreover, with the motor holder 100 according to this embodiment, since the spacer 130 includes the sloped portion 131, the motor 200 can be guided toward the first surface 110a as the shaft 201 of the motor 200 is moved from the second opening 122 to the first opening 121. This allows for easy fitting of the fitting part 203 of the motor 200 into the first opening 121 since the sloped portion 131 guides the motor 200 closer to the first surface 110a. In other words, work efficiency regarding mounting the motor 200 to the motor holder 100 while the rotating component 210 is attached to the motor 200 can be increased.

Moreover, with the motor holder 100 according to this embodiment, the length of the communicating section 123 can be made smaller than the diameter of a circle inscribed in the first opening 121. With this, the fitting part 203 of the motor 200 can be kept from shifting to the second opening 122 while the fitting part 203 is fitted in the first opening 121. This makes it even easier to mount the motor 200 in proper position.

Moreover, with the motor holder 100 according to this embodiment, the spacer 130 has a height, measured from the first surface 110a, (i) greater than the height of the fitting part 203 measured from the intersecting surface 202 and (ii) less than the distance from the intersecting surface 202 to the rotating component 210. With this, when the motor 200 is moved from the second opening 122 to the first opening 121, the rotating component 210 and the fitting part 203 can be spaced from the plate 110, thereby increasing work efficiency regarding mounting the motor 200 to the motor holder 100 while the rotating component 210 is attached to the motor 200.

### (First Variation)

Next, a first variation of the embodiment will be described. The shapes of the first opening, the second opening, and the spacer of the motor holder according to the first variation are different from those of the motor holder according to the above embodiment. Hereinafter, the motor holder according to the first variation will be described based on the differences with the above embodiment.

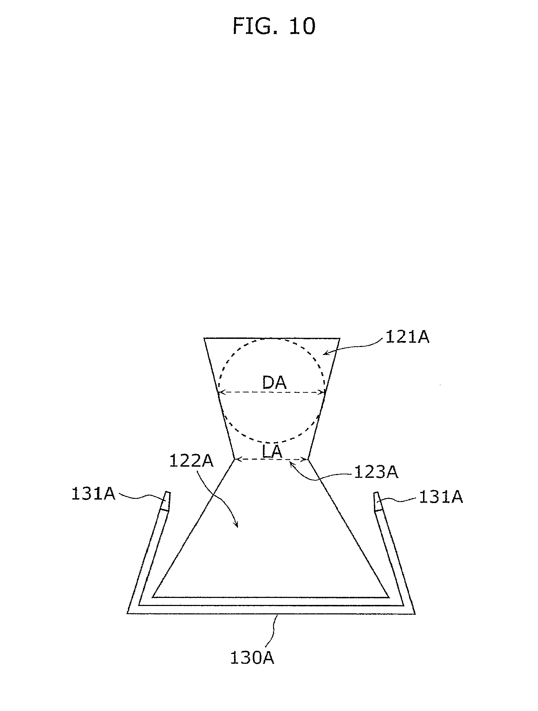

FIG. 10 illustrates the first opening, the second opening, and the spacer of the motor holder according to the first variation of the embodiment.

In the first variation, the first opening 121A and the second opening 122A each have a trapezoidal shape. The first opening 121A and the second opening 122A are in communication. More specifically, among the parallel sides of the trapezoidal first openings 121A and the second opening 122A (i.e., the top and bottom bases), the two shorter sides (top bases) are joined as a single common side. The region of this single common side is referred to as the communicating section 123A. In other words, the first opening 121A and the second opening 122A are connected by the communicating section 123A.

Here, the length LA of the communicating section 123A is less than the diameter DA of a circle (outlined with a dashed line in FIG. 10) inscribed in the first opening 121A. Since the fitting part 203 of the motor 200 essentially has the same shape and size as the circle inscribed in the first opening 121A, the fitting part 203 cannot shift to the second opening 122A while it is fitted in the first opening 121A.

The spacer 130A is formed along the periphery of the second opening 122A on the first surface. The ends of the spacer 130A are sloped portions 131A whose heights, measured from the first surface, decrease with decreasing distance to the first opening 121A.

Even with the first opening 121A, the second opening 122A, and the spacer 130A shaped in this way, similar to the above embodiment, the motor holder 100 allows the fitting part 203 to easily be fitted in the first opening 121A while the rotating component 210 is attached to the shaft 201 of the motor 200, without the rotating component 210 contacting the plate 110. In other words, even if the first opening 121A and the second opening 122A are not circular, the motor holder 100 can achieve the same advantageous effects achieved by the above embodiment.

### (Second Variation)

Next, a second variation of the embodiment will be described. The shapes of the first opening, the second opening, the communicating section, and the spacer of the motor holder according to the second variation are different from those of the motor holder according to the above embodiment. Hereinafter, the motor holder according to the second variation will be described based on the differences with the above embodiment.

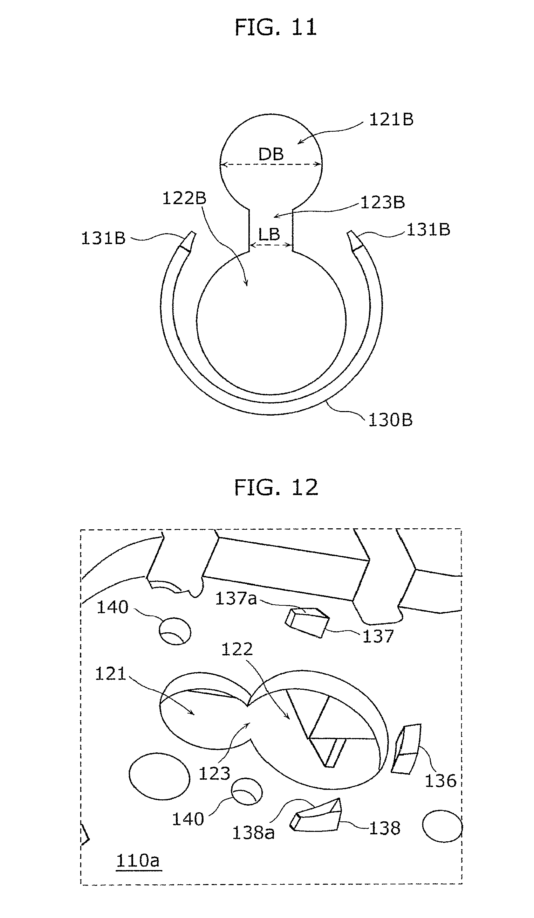

FIG. 11 illustrates the first opening, the second opening, and the spacer of the motor holder according to the second variation of the embodiment.

In the second variation, the first opening 121B and the second opening 122B each have a circular shape, similar to the above embodiment. However, the first opening 121B and the second opening 122B do not overlap each other.

The communicating section 123B is a path between the first opening 121A and the second opening 122B that connects the first opening 121A and the second opening 122B. The communicating section 123B has a width LB that is less than the diameter DB of the first opening 121. In other words, the length LB of the communicating section 123B, which connects the first opening 121B and the second opening 122B, measured in a direction perpendicular to the direction in which the first opening 121B and the second opening 122B are aligned, is less than the diameter DB of a circle inscribed in the first opening 121B (here, the diameter of the circle is the same as the diameter of the first opening 121B).

The spacer 130B is formed along the periphery of the second opening 122B and the communicating section 123B on the first surface. The ends of the spacer 130B are sloped portions 131B whose height, measured from the first surface, decrease with decreasing distance to the first opening 121B.

Even with the first opening 121B, the second opening 122B, the communicating section 123B, and the spacer 130B shaped in this way, similar to the above embodiment, the motor holder 100 allows the fitting part 203 to easily be fitted in the first opening 121B while the rotating component 210 is attached to the shaft 201 of the motor 200, without the rotating component 210 contacting the plate 110. In other words, even if the first opening 121B and the second opening 122B do not overlap each other, the motor holder 100 can achieve the same advantageous effects achieved by the above embodiment.

### (Third Variation)

Next, a third variation of the embodiment will be described. The motor holder according to the third variation is different from the motor holder according to the above embodiment in regard to the spacer. More specifically, with the motor holder according to the third variation, a plurality of spacers are dispersedly disposed. Hereinafter, the motor holder according to the third variation will be described based on the differences with the above embodiment.

FIG. 12 is an enlarged perspective view of a region where the motor is mounted on the motor holder according to the third variation of the embodiment. Note that in FIG. 12, structural elements that are the same as in FIG. 3 share like reference numerals, and descriptions thereof are omitted.

The motor holder according to the third variation includes three spacers-a spacer 136, a spacer 137, and a spacer 138. The three spacers 136 through 138 are the result of removing portions of the spacer 130 according to the embodiment. In other words, the spacer 136 according to the third variation corresponds to the middle section of the spacer 130 according to the embodiment. Moreover, the spacers 137 and 138 according to the third variation correspond to the end sections of the spacer 130 according to the embodiment.

The spacer 137 includes a sloped portion 137a, and the spacer 138 includes a sloped portion 138a. Similar to the above embodiment, the sloped portions 137a and 138a have heights, measured from the first surface 110a, that decrease with decreasing distance to the first opening 121.

Even with the three spacers 136 through 138 shaped in this way, the three spacers 136 through 138 can maintain a space between the first surface 110a and the intersecting surface 202 while the rotating component 210 is passed through the second opening 122 from the first surface 110a side to the second surface 110b side, without the rotating component 210 contacting the intersecting surface 202 of the motor 200. In other words, similar to the above embodiment, the motor holder 100 according to the third variation allows the fitting part 203 to easily be fitted in the first opening 121 while the rotating component 210 is attached to the shaft 201 of the motor 200, without the rotating component 210 contacting the plate 110.

### (Other Variations)

The motor holder 100 has hereinbefore been described according to an embodiment and variations according to the present invention, but the present invention is not limited to the embodiment and variations. Various modifications of the embodiment as well as embodiments resulting from arbitrary combinations of constituent elements of different embodiments that may be conceived by those skilled in the art are intended to be included within the scope of the present invention as long as these do not depart from the essence of the present invention.

For example, in the above embodiment and variations thereof, the spacer includes a sloped portion, but the spacer need not include a sloped portion. Even in this case, the spacer can maintain a space between the first surface of the motor holder and the intersecting surface of the motor, and as such, can increase work efficiency with regard to mounting the motor to the motor holder while the rotating component is attached to the motor.

Note that in the above embodiment and variations thereof, the motor holder is exemplified as being included in a printer, but the motor holder is not limited to this example. For example, the motor holder may be included in an image scanner or a facsimile apparatus. In other words, the motor holder may be included in any apparatus that includes a motor.

Note that in the above embodiment and variations thereof, the motor holder is exemplified as being made of resin, but the motor holder is not limited to this example. For example, the motor holder may be made of metal.

Note that in the above embodiment and variations thereof, the motor is exemplified as being fixed to the motor holder by inserting fasteners into the third openings of the motor holder and the holes in the motor, but the method of fixing the motor is not limited to this example. For example, the motor may be fixed to the motor holder using an adhesive. In this case, the motor holder need not include the third openings and the motor need not include the holes.

Note that in the above embodiment and variations thereof, the rotating component is exemplified as a spur gear, but the rotating component is not limited to this example. For example, the rotating component may be a bevel gear or a worm gear. Moreover, the rotating component need not be a gear. For example, the rotating component may be a flywheel.

Note that in the above embodiment and variations thereof, the fitting part of the motor is exemplified as having a cylindrical shape, but the fitting part is not limited to this example. For example, the fitting part may have an angular columnar shape or a conical shape. Moreover, for example, the fitting part may include a projecting portion that projects radially from a side surface of a cylindrical shape. Note that in any case, the first opening has a shape that corresponds to the shape of the fitting part in order to fit with the fitting part.

Note that in the above embodiment and variations thereof, the motor is moved while mounting the motor to the motor holder, but the motor holder may be moved instead. Moreover, both the motor and the motor holder may be moved. In other words, the motor may be moved relative to the motor holder.

Note that in the above embodiment and variations thereof, the spacer is exemplified as being a single component or three components, but the number of spacers provided is not limited to this example. For example, the motor holder may include four or more spacers disposed along the periphery of the second opening.

Although the present invention has been described and illustrated in detail, it is clearly understood that the same is by way of example only and is not to be taken by way of limitation, the scope of the present invention being limited only by the terms of the appended claims.

### Industrial Applicability

The motor holder according to one aspect of the present invention is applicable to electrical equipment, such as a printer, that uses a motor as a drive source, for example.

### Reference Signs List

- 10: printer
- 100: motor holder
- 110: plate
- 110a: first surface
- 110b: second surface
- 121, 121A, 121B: first opening
- 122, 122A, 122B: second opening
- 123, 123A, 123B: communicating section
- 130, 130A, 130B, 136, 137, 138: spacer
- 131, 131A, 131B, 137a, 138a: sloped portion
- 140: third opening
- 200: motor
- 201: shaft
- 202: intersecting surface
- 203: fitting part
- 204: hole
- 210: rotating component

## Claims

1. A motor holder to which a motor is mountable while a rotating component is attached to a shaft of the motor, the motor holder comprising:
a plate including a first surface and a second surface opposite the first surface;
a first opening formed through the plate and fittingly receiving a fitting part of the motor, the fitting part projecting from an intersecting surface of the motor and surrounding the shaft, the intersecting surface intersecting the shaft;
a second opening formed through the plate, the second opening being larger than the first opening and in communication with the first opening; and
a spacer projecting from the first surface and maintaining a space between the first surface and the intersecting surface of the motor by contacting the intersecting surface while the rotating component is passed through the second opening from the first surface side to the second surface side.

2. The motor holder according to claim 1,
wherein the spacer is formed along a periphery of the second opening on the first surface.

3. The motor holder according to claim 1 or 2,
wherein the spacer includes a sloped portion having a height, measured from the first surface, which decreases with decreasing distance to the first opening.

4. The motor holder according to any one of claims 1 to 3,
wherein the first opening and the second opening are connected by a communicating section having a length, in a direction perpendicular to a direction in which the first opening and the second opening are aligned, less than a diameter of a circle inscribed in the first opening.

5. The motor holder according to any one of claims 1 to 4,
wherein the spacer has a height, measured from the first surface, (i) greater than a height of the fitting part measured from the intersecting surface and (ii) less than a distance from the intersecting surface to the rotating component.
